# EUROPEAN PATENT APPLICATION

(11) **EP 1 424 794 A1**
(43) Date of publication of application: **02.06.2004**
(21) Application number: 02258221.7
(22) Date of filing: 28.11.2002
(51) Int. Cl.: H04B 10/08, H04B 10/158

(54) **A method for optimising operation of an optical communication link and a receiver therefor**

(71) Applicant: Agilent Technologies, Inc. - a Delaware corporation -, Palo Alto, CA 94303-0870 (US)
(72) Inventor: Lano, Roberto, Agilient Technologies Italia, 10148 Torino (IT)
(74) Representative: Coker, David Graeme

(57) **Abstract**

Operation of an optical communication link including a receiver (10) adapted to receive optical input signals (IS) and generate therefrom electric output signals (OS) as a function of a set of adjustable reception parameters (14) is optimised by associating with the receiver a processing unit (16), such as a microcontroller. The microcontroller (16) is adapted to selectively vary the set of adjustable reception parameters (14) and to detect at least one parameter (BER, Q, Pin) indicative of operation of the optical communication link including the receiver in correspondence with a given set of the adjustable reception parameters (14). The processing unit (16) selectively adjusts the set of adjustable reception parameters (14) as a function of the at least one parameter (BER, Q, Pin) indicative of operation of said optical communication link in order to optimise operation of the optical communication link.

## Description

The invention relates to optical communication links and specifically relates to optimising operation of such links.

Commercial WDM (Wavelength Division Multiplexing) optical communication systems, especially of the "dense" (DWDM) type, provide a high capacity and are adapted to work with links of different lengths with or without the use of optical amplifiers.

A number of sources of impairment of the signal transmitted are intrinsically present in such a link. For instance, the optical signal is subject to chromatic dispersion while being propagated along the link: this leads to distortion of the so-called eye diagram at the receiver, which generally leads to a degradation in the bit error rate (BER) performance of the link. A way of combating the effect of chromatic dispersion is typically to increase the decision threshold at the receiver.

Noise associated with the optical signal at the receiver is generally known to be signal-dependent. Specifically, in the case of receivers employing avalanche photo-detectors (APDs), increasing the APD bias leads to an increase of the multiplication factor (that is the receiver sensitivity) while also increasing the noise power associated with the "1" signal level.

A solution for mitigating the effect of a signal dependency of noise in WDM systems is disclosed in e.g. US-A-4 267 590. This prior art solution provides for synchronising transmission of optical signals on adjacent WDM channels so that decision on the signal transmitted over a given channel is taken at times where the signals transmitted on adjacent channels are at a minimum level. This irrespective of whether a "0" or "1" is being transmitted on such adjacent channels. In addition to requiring fairly sophisticated control of transmission over adjacent channels, such prior arrangement is unsuitable for combating signal-dependent noise generated by the very signal upon which the decision has to be taken.

Provisions usually exist in APD-based receivers in order that an optimum setting point for the APD bias can be defined in conjunction with the decision threshold. Such a threshold can be suitably optimised especially in the case of DC-couple receiver. The optimum decision threshold is in this case lower than 50%, which is in contrast to the increase in the decision threshold dictated by the desire to combat the effects of chromatic dispersion.

Furthermore, the parameters considered may exhibit different optimum setting points for different input power levels. The need therefore exists for solutions that may permit operation of optical links to be optimised by taking into account the various parameters involved and their possibly conflicting effects on link performance.

According to the present invention, such an object is achieved by means of a method having the features set forth in the claims that follows. The invention also relates to a receiver for an optical communication link adapted to operate according to such a method.

Essentially, an embodiment of the invention provides for the possibility of controlling, preferably by means of a processing unit such as a microcontroller, the various parameters affecting operation of an optical communication link such as a WDM or DWDM optical communication link.

This applies primarily to receiver operation. For instance, if APD noise is considered to be the dominant noise factor, performance of the system can be optimised by controlling the APD bias as well as the decision threshold in the receiver as a function of the input power level. This may be obtained by implementing an algorithm wherein the decision threshold is set as a function of accumulated chromatic dispersion and optical noise.

By using a microcontroller, the receiver parameters may be initialised while adapting them over time e.g. to optimise the setting points for the APD bias and the decision threshold of as a function of a given parameter such as optical input power and the like. The entities measured are recorded in the microcontroller and the main parameters in the receiver are set in order to achieve the desired optimisation based on predefined initialisation and external condition definition.

The invention will now be described, by way of example only, with reference to the annexed figures of drawing, wherein:
- Figure 1 is a schematic block diagram of a receiver of an optical communication link adapted to operate according to the invention, and
- Figure 2 is a flow chart representative of a possible way of operating a receiver of the kind shown in figure 1.

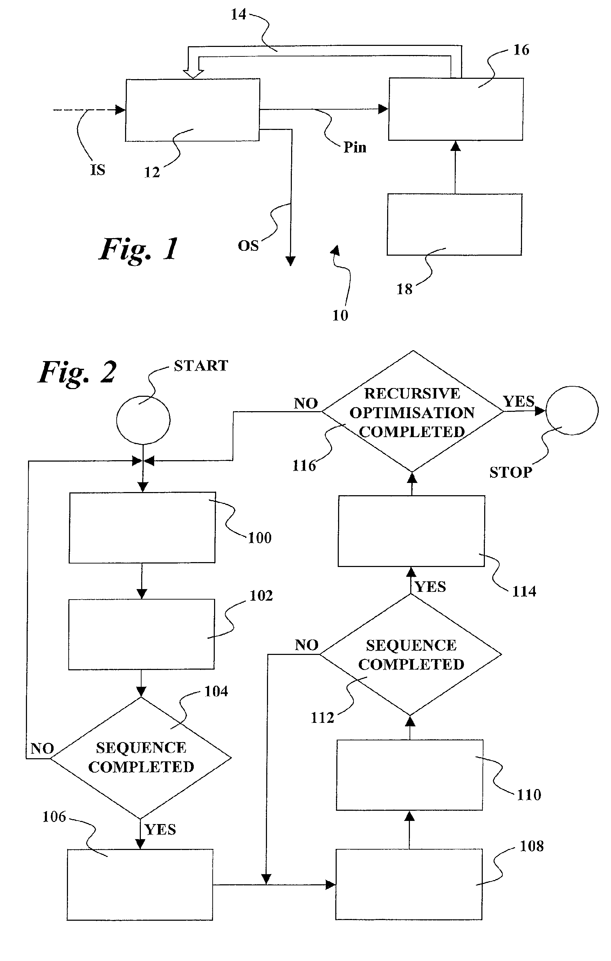

In figure 1, a receiver for an optical communication link such as a WDM or DWDM link is generally denoted 10.

The receiver 10 includes, as a basic building block, a receiver unit designated 12. The unit 12 is adapted to receive incoming optical signals IS over an optical waveguide such as an optical fibre (not shown). In the unit 12 those signals are detected to generate therefrom an electrical output signal OS comprised of a data stream corresponding to the digital information carried over the optical signal IS.

The receiver unit 12 typically includes an opto-electrical detector such as an avalanche photodiode (APD). The bias voltage of the APD and the decision threshold of the detector circuitry associated with the photodiode (as well as other possible operating parameters of the receiver unit 12) can be selectively adjusted by means of respective adjustment signals conveyed over a line 14.

The general structure of the receiver 12 and the possibility of adjusting the operating parameters thereof are well known in the art and, as such, do not require to be described in detail here.

Reference 16 designate a processing unit, such as a microcontroller, that is sensitive to the characteristics of the signal(s) processed in the receiver unit 12 and is adapted to generate the control (i.e. adjustment) signals to be transmitted towards the receiver unit 12 over the line 14.

In the exemplary embodiment shown herein, sensitivity of the microcontroller 16 to the power level Pin of the incoming optical signal IS has been specifically highlighted: the microcontroller 16 may however be sensitive to any of the parameters representative of operation of the receiver unit 12, such as e.g. the signals processed both at the optical level and at the electrical level within the receiver unit 12 (e.g. bit error rate or BER, Q factor, eye diagram parameters such as crossing point, rise and fall time, ..).

When the receiver 10 is activated, operation of the microcontroller 16 (and, consequently, of the receiver 12) is determined by a set of initial parameters generally designated 18. Operation of the receiver 10 usually provides for a pre-working calibration step as well as an in-line control process, such a control process being repeated over time in order to maintain optimum operation of the receiver 10 irrespective of possible variations in the operating condition of the optical link.

The initial calibration step leads to device dependent parameters for the different working conditions of the link (that is the main sources of impairment such as APD noise, optical amplifier noise, chromatic dispersion and so on) to be stored in the memory of the microcontroller 16. During operation of the link, the operating parameters of the receiver 12 are monitored and adapted in order to take into account possible variations in the operating conditions of the communication link as a function of parameters measured. These parameters may include both physical parameters representative of operation of the receiver unit 12 (such as the average power level of the incoming optical signal IS), and parameters related to the very nature of the digital signal being transmitted.

For instance, the bit error rate or BER measured over a test set of data (that is a so-called "probe" data sequence).

The flow chart of figure 2 related to an exemplary embodiment of invention where two parameters in the receiver unit 12 are optimised, namely the APD bias and the decision threshold. Optimisation is carried out as a function of the BER determined (in a known manner) on a probe string of data. Generally, the sequence of steps highlighted in figure 2 is adapted to be carried out both during pre-working calibration as well as in performing in-line control of system operation.

Those of skill in the art will promptly appreciate that the flow chart figure 2 is a purely exemplary nature. The same underlying concept can be extended to any number of parameters involved in the optimisation process, while optimisation of different parameters may occur jointly by resorting to parallel processes. Also, even though the presently preferred embodiment of the control unit 16 is in the form of a microcontroller, alternative embodiments may comprise other kinds of processing units such as e.g. a microprocessor or a microcomputer.

Referring now to the flow chart of figure 2, starting from a START step, a first step 100 provides for a so-called probe data string being transmitted with a given power level Pin over the communication link. In a step designated 102 such a probe data string is detected at receiver unit 12 and the corresponding BER is determined.

This sequence of steps is repeated a number of times for different values of the first parameter to be optimised, namely the APD noise level. Once this sequence has been repeated a number of times, as determined by a decision step 104, in a step 106 the best BER value over the sequence is identified and the APD bias at which the optimum BER value was achieved is stored as the current optimum parameter.

A thoroughly similar sequence of steps including transmission of a probe data string over the optical link (step 108) and determining the respective BER value (step 110) is repeated a number of times - set in a decision step 112 - by correspondingly varying the second parameter to be optimised, namely the decision threshold level.

Once this further sequence is completed, the best BER value is determined and in a step 114 the value of the decision level at which such BER value was obtained is stored in the microprocessor 16 as the currently optimum value for the decision level.

At this point, the two optimum values for the APD bias level and the decision level as stored in microcontroller 16 in steps 106 and 114 are used to operate the receiver unit 12 and the optimisation process is thus led to a STOP phase.

This process may then be repeated at given intervals of times in order to ensure that operation of the system is optimised in order to take into account possible changes in the operating parameters of the communication link.

In the flow diagram of figure 2, a step designated 116 indicates the possibility that optimisation of the various parameters in the receiver may have a recursive nature. In this case a first optimising sequence is carried out with respect to a first parameter (for instance the APD bias value), followed by optimisation of another parameter (for instance the decision level). Such an optimisation sequence of the decision level is followed by other optimisation sequences of the APD bias value and the decision level. At each repetition of those sequences, the optimum parameters defined during the previous optimisation sequences are used as a starting point thus achieving, after repetition of the whole process a given number of times, joint optimisation of both parameters.

As already indicated in the foregoing, this process can be extended to any number of parameters being optimised.

Of course, without prejudice to the underlying principle of the invention, the details and embodiments may vary with respect to what has been described by way of example only, without departing from the scope of the invention as defined in the claims that follow.

## Claims

1. A method of optimising operation of an optical communication link including a receiver (10) adapted to receive optical input signals (IS) and generate therefrom electric output signals (OS) as a function of a set of adjustable reception parameters (14), **characterised in that** it includes the steps of:
- associating with said receiver (10) a processing unit (16), said processing unit (16) being adapted to selectively adjust said set of adjustable reception parameters (14) and detect at least one parameter (BER, Q, Pin) indicative of operation of said optical communication link in correspondence with a given set of values of said set of adjustable reception parameters (14), and
- selectively adjusting said parameters in said set of adjustable reception parameters (14) as a function of said at least one parameter (BER, Q, Pin) indicative of operation of said optical communication link to optimise said at least one parameter indicative of operation of said optical communication link.

2. The method of claim 1, **characterised in that** said set of adjustable reception parameters (14) includes at least one parameter selected from the group consisting of: decision threshold in said receiver unit (12), optical amplification gain, APD bias.

3. The method of either of claims 1 or 2, **characterised in that** said at least, one parameter indicative of operation of said optical communication link is selected as the optical input power (Pin) to said receiver (10).

4. The method of any of claims 1 to 3,
**characterised in that** said at least one parameter indicative of operation of said optical communication link is selected as the bit error rate (BER) over said optical communication link or a parameter related thereto (Q).

5. The method of any of the previous claims, **characterised in that** it includes the step of repeatedly performing said optimisation step during operation of the said optical communication link.

6. A receiver for receiving optical input signals (IS) and generating therefrom electric output signals (OS) as a function of a set of adjustable reception parameters (14), **characterised in that** it includes a processing unit (16) adapted to selectively adjust said set of adjustable reception parameters (14) and detect at least one parameter (BER, Q, Pin) indicative of operation of said optical communication link in correspondence with a given set of values of said parameters in said set of adjustable reception parameters (14); said processing unit (16) being configured to selectively adjust said parameters in said set of adjustable reception parameters (14) as a function of said at least one parameter (BER, Q, Pin) indicative of operation of said optical communication link to optimise said at least one parameter indicative of operation of said optical communication link.

7. The receiver according to claim 6, for the method of claim 1, **characterised in that** said processing unit is a microcontroller (16).

8. The receiver of either of claims 6 or 7, **characterized in that** said set of adjustable reception parameters (14) includes at least one parameter selected from the group consisting of: decision threshold, optical amplification gained and APD bias.

9. The receiver of any of claims 6 to 8, **characterised in that** said at least one parameter indicative of operation of said optical communication link is selected as the optical input power (Pin) to said receiver (10).

10. The receiver of any of claims 6 to 9, **characterised in that** said at least one parameter indicative of operation of said optical communication link is selected as the bit error rate (BER) over said optical communication link or a parameter related thereto (Q).
